# EUROPEAN PATENT APPLICATION

(11) **EP 3 438 913 A1**
(43) Date of publication of application: **06.02.2019**
(21) Application number: 16896921.0
(22) Date of filing: 31.03.2016
(51) Int. Cl.: G06Q 50/02, G06Q 30/06

(54) **ASSET RENTAL SERVICE SYSTEM**

(71) Applicant: Hitachi, Ltd., Tokyo 100-8280 (JP)
(72) Inventor: MAEKI Akira, Tokyo 100-8280 (JP)
(74) Representative: MERH-IP Matias Erny Reichl Hoffmann Patentanwälte PartG mbB
(86) International application number: PCT/JP2016/060756
(87) International publication number: WO 2017/168704

(57) **Abstract**

The purpose of the present invention is to provide a system for making the maximum use of held assets in the resource exploration business. One aspect of the present invention, which is directed to solving the above problem, is an asset rental service system whereby it is possible to rent facilities for resource exploration, said asset rental service system being characterized by being provided with: an asset database which stores and associates the models of facilities that owners desire to rent out, rental periods for the facilities, and history information about the facilities at times other than when the facilities were used, with the names of the owners; a reliability evaluation server which calculates a reliability factor relating to the reliability of each facility on the basis of history information about the facility at times other than when the facility was used; and an asset distribution server which receives a request from a user who desires to rent facilities.

## Description

### Technical Field

The present invention relates to an asset rental service system.

### Background Art

A large-sized reservoir (oil reservoir) that facilitates mining has already been discovered and developed, and in the future, exploration at a complicated stratum whose depth is deeper is required. On the other hand, for the exploration in these regions, sensitivity improvement of a sensor and large-scale exploration on earth's surface corresponding to the depth are indispensable. From the market, both of a system that ensures them and low cost operation are required.

One of methods widely used in the resource exploration is a method referred to as a geophysical exploration or a reflection survey. In principle, an elastic wave generated by an artificial seismic source (for example, a dynamite or an earthquake simulation vehicle that pulsates the ground) reflects on an interface of the stratum, for example, an interface of a deposit of oil, a gas reservoir, water, a rock strata, or the like. Many sensors installed on earth's surface or a winze receive the reflected wave that returns to earth's surface. Then, a reservoir image is constituted from these reflected wave data.

To precisely know oil and gas stored in a subsurface structure and the reservoir, a dense measurement where a sensor arrangement interval is narrowed is preferred. However, to that extent, a quantity of the installed sensors increases. For example, a current large-scale exploration is in a scale having tens of thousands of channels. In the future, it is expected that a large-scale exploration is in a scale having hundreds of thousands of channels, the quantity of channels substantially increases. For achievement of this exploration operation, in an exploration service company, many facility materials (assets) for exploration and operation using these many assets are required, and reduction of CAPEX (a capital expenditure regarding a facility investment for maintaining or improving a value of the facility) and OPEX (an ongoing necessary cost for operation of the business or the like) will be a big problem.

PTL 1 discloses a technique that ensures such a large-scale resource exploration service.

### Citation List

### Patent Literature

PTL 1: Japanese Patent Application Laid-Open Publication No. 1992-188091.
PTL 2: Japanese Patent Application Laid-Open Publication No. 2006-155008.

### Summary of Invention

### Technical Problem

In a business currently performed, for example, an open mining area bidding from a resource-rich country is performed, and for this, the oil companies make a bid to undertake its exploration, development, and production. The oil company that has got a contract makes contracts with respective specialized subcontractors, to proceed a geophysical exploration, an excavation operation, and the like.

For example, a company that provides a geophysical exploration service makes a bid based on a resource exploration specification (Scope of Work (SoW)) released from an oil company or the like. In a case of a large-scale exploration performed in years, a sensor having tens of thousands to hundreds of thousands of channels is required.

Similarly, a company that performs drilling (excavation) is required to prepare machinery for drilling to dig a wildcat and a production well. A company that undertakes production of oil, gas, and the like is required to prepare a production facility, an offshore-platform related facility, or a transport ship, a track, a helicopter, and the like for transportation.

Thus, respective main companies that attempt to participate in the business are required to procure various facilities, systems, equipment, and components (hereinafter collectively referred to as the "facility") and hold them as assets. Alternatively, when there is a company that holds and rents out them, it is necessary to rent them.

These facilities are, from economic necessity, used until a guaranteed lifetime limit, and often used until when a predetermined performance becomes not being satisfied, or a possibility that the predetermined performance is not satisfied has increased. Therefore, it is important to appropriately manage a quality over a long period as the assets. On the other hand, a change in a resource price has become large caused by a strategy of the resource-rich country, a change in a world economy, creation of a new energy source, and the like. Thus, it has become difficult to predict a condition of a resource business on a long-term basis.

Thus, since having many facilities is, for the company, steadily costly, optimization of the facility and maximum utilization of the holding facility are business challenges. PTL 2 discloses a rental system that does not hold the facility, and rents them to ensure efficient operation.

PTL 2 proposes a rental system that improves operation rates of civil engineering and construction machines held by builders and contractors, and the like, to reduce rental costs. However, unlike the rental of the civil engineering machine and the like as disclosed in PTL 2, the resource exploration handles tens of thousands to hundreds of thousands of many facilities, and an usage environment (for example, desert, tundra area, and jungle) is severe and significantly different. As intercontinental movement, it is necessary to convey the facility in areas having completely different conditions at long-distance. Thus, it is difficult to guarantee its quality only by an operation amount alone.

That is, for example, in a case of the oil, the usage is considered under various environments on earth, such as the tundra area, the bottom of the sea, the desert, and the forest area. The conveyance at long-distance is required between these usage positions.

Therefore, an object of the present invention is to provide a system for effectively utilizing a holding asset, in a resource exploration business.

### Solution to Problem

One aspect of the present invention to solve the above-described problems is an asset rental service system that ensures rental of a facility for resource exploration. The asset rental service system includes an asset database that associates and stores a model, a renting-out period, a usage history, and conveyance history information of the facility that an owner desires to rent out, with the owner, a reliability evaluation server that calculates a reliability factor related to a reliability of the facility, based on the usage history and the conveyance history information, and an asset distribution server that accepts a request from a user that desires to rent the facility.

Another aspect of the present invention is an asset rental service system includes a secure asset database that stores an identifier, a model, a renting-out period, history information when the facility is used, and history information other than when the facility is used, of a facility that an owner desires to rent out, a reliability evaluation server that calculates a reliability factor of the facility, based on the history information when the facility is used, and the history information other than when the facility is used, and an asset distribution server that accepts a request from a user that desires to rent the facility.

In one more specific example of the present invention, the request includes a model, a renting-out period, a quantity, and an estimated use area of a facility that a user desires to rent, and the asset distribution server corrects the reliability factor based on the estimated use area.

In another more specific example of the present invention, the request includes a model, a renting-out period, a quantity, and an estimated use area of a facility that a user desires to rent, and the asset distribution server corrects the quantity based on the estimated use area.

In a more specific example of the present invention, precision equipment such as an acceleration sensor is assumed as a facility.

### Advantageous Effects of Invention

With the present invention, in the resource exploration business, the system for effectively utilizing the holding asset can be provided. The company that performs the resource exploration service can also use a reliable facility, to streamline its exploration operation.

### Brief Description of Drawings

FIG. 1 is a block diagram illustrating an exemplary entire asset distribution system in resource exploration equipment.
FIG. 2 is a table of exemplary information on a renting bulletin board.
FIG. 3 is a table of an exemplary content on a renting-out board.
FIG. 4 is a table illustrating an exemplary rental bulletin board.
FIG. 5 is a conceptual diagram for ensuring supply-demand forecast.
FIG. 6 is a table illustrating an exemplary content in an asset database.
FIG. 7 is a table illustrating a specific example of a sensor unique number and a battery unique number.
FIG. 8 is a plan view illustrating a state where usage history information is displayed on a monitor for a facility having a certain unique facility ID.
FIG. 9 is a plan view illustrating an exemplary screen that displays a content of an "EXPLORE" in detail.
FIG. 10 is a flowchart illustrating an exemplary process flow in an asset distribution system in an example.
FIG. 11 is a flowchart illustrating another exemplary process flow in the asset distribution system in the example.
FIG. 12 is a flowchart of a detail process of a renting-out facility arrangement by an asset distribution server.

### Description of Embodiments

Embodiments will be described in detail using the drawings. However, the present invention is not interpreted limited to the content of the embodiments described below. It will be easily understood for those skilled in the art that changes in its specific configuration are possible without departing from the thought and the technical scope of the present invention.

In the configuration of the invention described below, identical reference numerals are used in common between different drawings, for identical parts or parts having similar functions, and therefore overlapping explanation is sometimes omitted.

Notations such as "first," "second," and "third" in this description are attached for identifying components, and do not necessarily limit a count or an order. The number for identifying the component is used by contexts, and the number used in one context does not necessarily indicate an identical configuration in another context. The component identified by a certain number does not interfere with doubling as a function of a component identified by another number.

The position, the size, the shape, the range, and the like of each configuration illustrated in the drawing and the like sometimes do not represent actual position, size, shape, range, and the like, for ease of understanding of the invention. In view of this, the present invention is not necessarily limited to the position, the size, the shape, the range, and the like disclosed in the drawing and the like.

In the example, when a plurality of pieces of components considered equivalent exist, the components are sometimes discriminated by attaching an index after the number. However, when it is not necessary to especially discriminate them, the index is sometimes omitted.

### Example 1

### <1. Entire System>

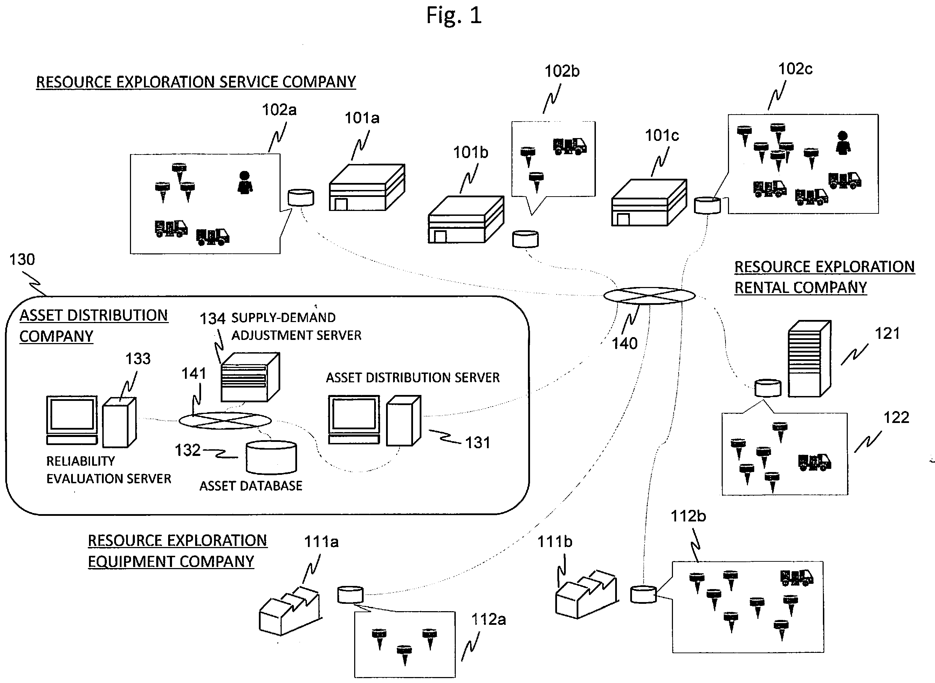

FIG. 1 is a view illustrating an exemplary entire asset distribution system in resource exploration equipment. Resource exploration equipment companies 111a and 111b are companies that manufacture and sell a facility such as a sensor. Resource exploration service companies 101a, 101b, and 101c are companies that perform a resource exploration using the facility. A resource exploration rental company 121 is a company that procures the facility to rent-out it to the resource exploration service company 101.

For example, the resource exploration rental company 121, when taking a rental form of renting-out, rents out the facility purchased from the resource exploration equipment company 111 to the resource exploration service company 101 that is a consumer. Alternatively, the resource exploration rental company 121, when taking a form of lease, purchases the equipment from the resource exploration equipment company 111, to perform the rental, corresponding to a request from the resource exploration service company 101.

Therefore, the resource exploration service company 101 that is the consumer purchases a facility required for the exploration from the resource exploration equipment company 111, to hold and utilize it as one's asset, or temporarily rents it from the resource exploration rental company 121 in the renting-out or lease form. In this case, there is a problem that, in the resource exploration service company 101, the resource exploration equipment company 111, and the resource exploration rental company 121, a quantity of excess facilities that are not used and remain in a warehouse or the like varies depending on a period, and the excess facilities are not effectively utilized.

In this example, the resource exploration service company 101 holds one's usage facility data 102 used for the resource exploration service. The resource exploration equipment company 111 that manufactures and sells, or rents out the resource exploration equipment holds supply facility data 112 of the resource exploration equipment. The resource exploration rental company 121 that rents out the equipment required for the resource exploration to the resource exploration service company 101 purchases and holds the facility from the resource exploration equipment company 111, and holds rental facility data 122 for renting out it corresponding to the request from the resource exploration service company 101.

In the system in this example, for effective utilization of the excess facility, an asset distribution company 130 interposes. The asset distribution company 130 collects and holds information of facility data 102, 112, and 122 held by the respective companies in an asset database 132 via an asset distribution server 131 through a network 140.

Alternatively, the asset database 132 may ensure a function equal to hold the facility, by accessing the respective facility data 102, 112, and 122 to know the data. The asset database 132 is coupled to the asset distribution server 131, a supply-demand adjustment server 134, and a reliability evaluation server 133, via a network 141.

Here, the asset database 132 can be constituted as, what is called, a data server including a storage. The asset distribution server 131, the supply-demand adjustment server 134, and the reliability evaluation server 133 can be constituted as ordinary servers. The data server or the server, as is well known, is an information processing device including an input device, an output device, a processing device, and a storage device.

In this example, functions such as calculation, control, and processing are ensured by a determined process in cooperation with other hardware, such that a program stored in the storage device is executed by the processing device (processor). The program executed by the processing device or the like, its function, or means that ensures this function are possibly referred to as "function," "means," "portion," "unit," "module," and the like.

### <2. Renting Bulletin Board>

The respective resource exploration service companies 101, at a certain point, when a request (SoW) of the resource exploration is disclosed from the oil company or the like, estimate the facility required for ensuring the exploration disclosed in the SoW, technical possibility, and further, profitability and the like, to determine whether making a bid. At this time, when it is determined that performing the service by one's holding facility is difficult, the resource exploration service companies 101 access the asset distribution server 131 of the asset distribution company 130, to attempt to accrue the facility required at that period, or to inquire whether the facility can be procured at a desired cost.

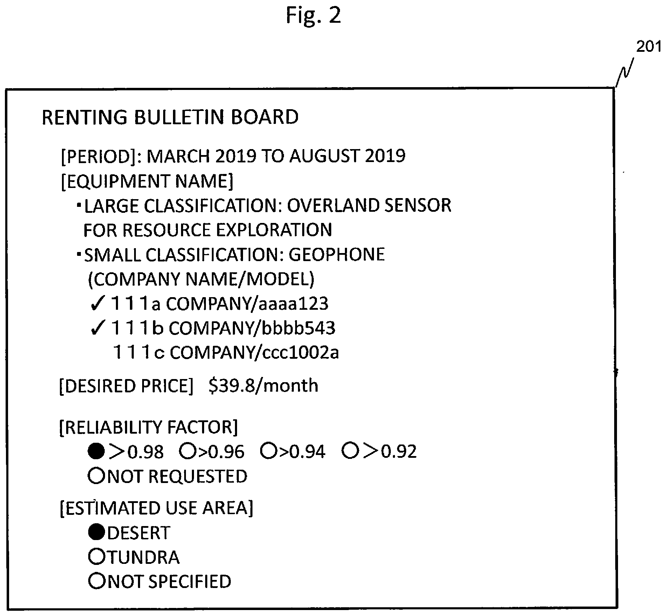

FIG. 2 is exemplary information on a renting bulletin board 201 released by the inquiry. For example, as illustrated in FIG. 2, the inquiry includes the following information. For example, a renting-desired period is included. Information of the facility desired for renting is included. As the information of the facility, for example, a kind and a use of a product can be specified, such as whether it is a sensor for land or an earthquake simulation vehicle, and among the sensors for land, whether it is a speed meter referred to as a geophone or a semiconductor-type acceleration sensor using an MEMS technique. When a model of the product is apparent, the model may be specified.

A cost (a desire price) during the period can be also included. A reliability factor (parameter) that specifies reliability can be included. The reliability factor can be determined, for example, based on passed years from manufacturing year and date. The reliability factor may be, for example, a value that correlates with a failure rate, and conversely, may be a value that correlates with an operation rate. The reliability factor may be a value based on a usage environment or environment information in non-utilization time, or further, may be a value based on a load (for example, impact and temperature change) each received.

Furthermore, the information can include other conditions such as a required quantity, specification, and a closing date for making a bid. As data for evaluating a required reliability, an "estimated use area" that indicates an environment where the facility will be used can be included. When such information is presented to the asset distribution server 131 of the asset distribution company 130, the asset distribution server 131 releases this information to a user in a predetermined range. The user is an entity that possibly desires the renting of the facility. Here, any of the resource exploration equipment company 111, the resource exploration service company, and the resource exploration rental company 121 can be a user. On the other hand, an entity that possibly desires the renting-out is hereinafter referred to as an owner. Any of the resource exploration equipment company 111, the resource exploration service company, and the resource exploration rental company 121 can be an owner.

As a result of the release of the renting bulletin board 201, for example, the resource exploration service company 101, the resource exploration rental company 121, and the like that can access this information show the determination of making a bid whether to rent out the facility in that condition to the asset distribution server 131, based on the inquiry information presented from the asset distribution server 131. In this flow, the system of the asset distribution company 130 conceals company information of the user and the owner as necessary, and evaluates the reliability of facility information of the owner using the asset database 132 and the reliability evaluation server 133, to provide an answer to the user in addition this information.

To the reliability, various levels of reliability information, for example, from a simple reliability guarantee based on a date of manufacturing of a terminal, to a reliability guarantee considering a past usage history of each terminal can be added. With reference to the reliability information, the user can select the facility to be rented. With reference to the reliability information, the asset distribution company 130 can set a renting-out value. It is also possible to present the actual renting-out quantity including a spare quantity considering the failure rate, to the user and the owner.

When the owners compete, by presenting the reliability and the price, the determination can be left to the user. A form that the user preliminarily presents the price as described above, and then, the owners make a bid may be taken. A form that in an auction format without presenting the price, the owners are caused to compete in the price for making a bid may be taken. Alternatively, the asset distribution company 130, when the asset distribution company 130 can access the facility data included in the respective companies, also can actively request the company that can rent out the facility to become the owner.

The resource exploration rental company 121 has an incentive to maximize a renting-out period, and to maximize a renting-out price. The resource exploration service company 101, when having an idle asset in the holding assets caused by a failure to receive an order of the scheduled large-scale exploration or no exploration matter, has a desire to rent out and monetize the idle asset. However, the resource exploration service company 101, when becoming the owner, desires not to disclose one's condition, thus desiring to rent out the idle asset in secret. For the facility to be rented out, the reliability during the renting-out period is preferred to be secured, or a degree of deterioration during the renting-out period is preferred to be known. These secrecy collateral and reliability collateral are ensured by the reliability evaluation server 133 or the like of the asset distribution company 130.

### <3. Price Setting>

### <3-1. Price Setting based on Reliability>

The reliability evaluation server 133 of the asset distribution company 130 performs a failure sign diagnosis and a reliability evaluation based on a lifetime log, a date of manufacturing, a usage history, and the like of the asset, and a deterioration model, to quantify the reliability. For example, an asset whose manufacturing date is old, an asset whose actual usage period is long, an asset having a high usage frequency, an asset used in a severe environment, and the like are assumed to have a high possibility that a battery, a sensor, a casing, and the like are deteriorated, and to have a reliability lower than that of a new asset. In this case, the renting-out price can be kept low. Alternatively, the renting-out price can be increased such that the reliability evaluation server 133 secures the reliability during the renting-out period.

### <3-2. Price Setting based on Supply-Demand Balance/Auction System>

It is also possible to actively and preliminarily disclose information of an asset that can be rented out, for example, the model number, the quantity, the period, and the renting-out price as a renting-out board, from the owner, to prompt the user to perform the determination in it.

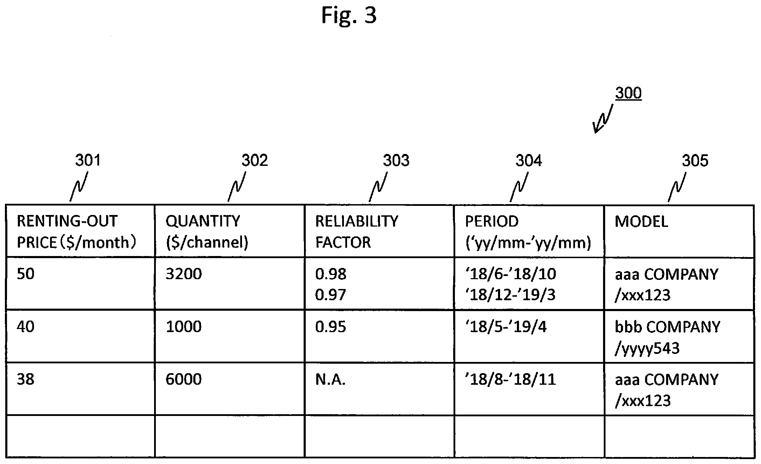

FIG. 3 is an exemplary content on a renting-out board 300 provided from the owner. The renting-out board 300 includes, for example, a renting-out price 301, a quantity 302, a renting-out-desired or renting-out-possible period 304, and a product model number 305. Other information regarding the facility may be included. Reliability-related information 303 may be added by the asset distribution company 130.

Together with the renting-out board 300, disclosing facility information required by the user as a renting board can evoke supply from the owner.

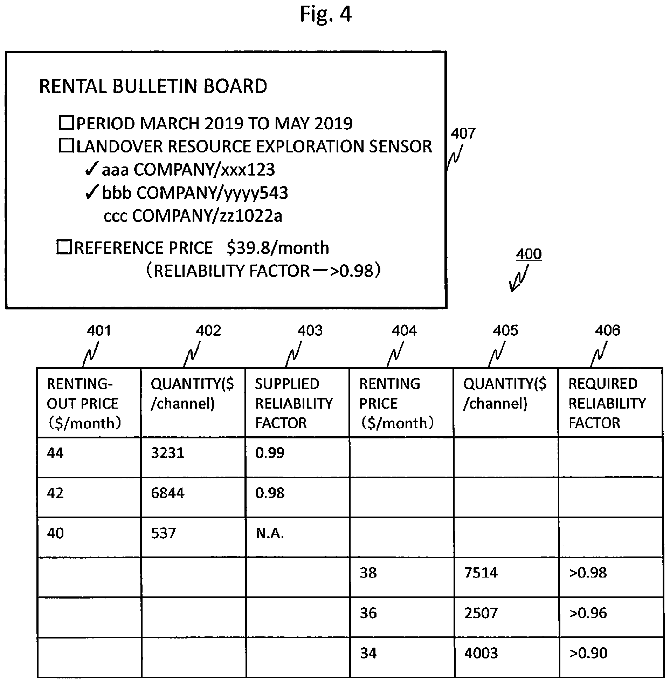

FIG. 4 is an exemplary rental bulletin board 400 that displays the information of the user, in addition to the information from the owner. The rental bulletin board 400 releases a renting-out price 401, a renting-out quantity 402, a reliability factor 403, and the like, as the information from the owner. As the information from the user, a renting price 404, a renting quantity 405, a reliability factor 406, and the like are released. It may be configured to display more detailed information 407 by clicking the information of the owner.

The above is an effective measure when the renting-out board and the renting board can be disclosed. However, when the disclosure is not desired, the asset distribution company 130 that operates a distribution market may receive the request from the user to sound the resource exploration equipment company 111 and the resource exploration rental company 121 on the renting.

The owner declares a renting-out period for a temporally prior period to ensure acquisition of an opportunity for highly renting-out. The owner declares the renting-out before an issue of the SoW to ensure setting at high renting-out price.

### <3-3. Price Setting based on Supply-Demand Balance/Supply-Demand Forecast>

It is also possible to know a supply-demand balance to set a price, based on future exploration information, an asset amount distributed in the market, or a plan of the new product sold by the resource exploration equipment company 111. It is also possible to set a price in accordance with a distribution amount by holding this supply-demand information and a supply-demand forecast algorithm on one's own. These functions also can be provided as a service.

The user and the owner are allowed to rent such that the asset information is disclosed only to the asset distribution company 130, and one's asset condition is not disclosed to a competitor and the like. Furthermore, one's asset data provided to the asset distribution company 130 can get the failure sign diagnosis. Thus, a failure period of one's asset is stochastically determined. Accordingly, without discarding the asset based on a manufacturing period as before, and without maintenance, the asset can be effectively utilized, and a cost-effectiveness for the maintenance increases. The user can reduce and know a failure risk in an exploration field since the asset is rented out in a state where the reliability is secured. On the other hand, the owner also has a merit that the renting-out opportunity increases by the asset distribution company 130, by providing the asset information. The addition of the failure rate becomes an added value in renting-out. Thus, a possibility that allows information provision increases.

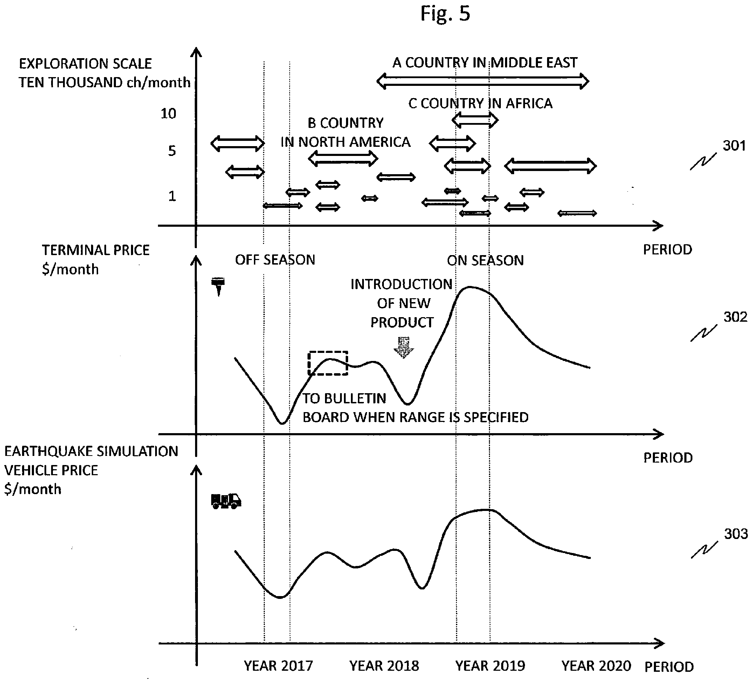

FIG. 5 illustrates a conceptual diagram for ensuring the supply-demand forecast. Since an exploration plan of each country is open information, it is possible to estimate how many sensor terminals are used in the world. For example, it can be determined based on prior information such that a large-scale exploration having hundreds of thousands of channels is performed over three years in a resource-rich country in Middle East, and an exploration having tens of thousands of channels occurs for a few months in North America. Needless to say, the plan may be accelerated or delayed caused by various factors such as a fluctuation of an oil price and a change in a policy, thus increasing indeterminacy toward the future. An amount of money in the rental varies corresponding to this exploration plan and the total quantity of one's assets. Presentation of a predicted value of this amount of money allows the company that performs the exploration service to obtain options such as whether it is a matter to bid, a countermeasure when making the bid fails in bidding, or renting-out at a high price by making a precontract without making the bid. At this time, a market value of each device can be accurately set by obtaining a manufacturing plan, an introduction time of a new product, and the like of the resource exploration equipment company 111 that is a supply side, not only a demand side.

Data and a program for such a supply-demand forecast are stored in the supply-demand adjustment server 134 to perform the supply-demand forecast.

### <4. Apply of Reliability Evaluation>

When the reliability is evaluated, data that will be input includes manufacturing information, usage history, storage information, and the like. Such data will be stored in the asset database 132. The asset database 132 is constituted of a secure server that digitizes and holds all the facilities supplyable at the asset exploration service company 101, the resource exploration equipment company 111, the resource exploration rental company 121, and the like, under access restriction in the asset distribution company 130.

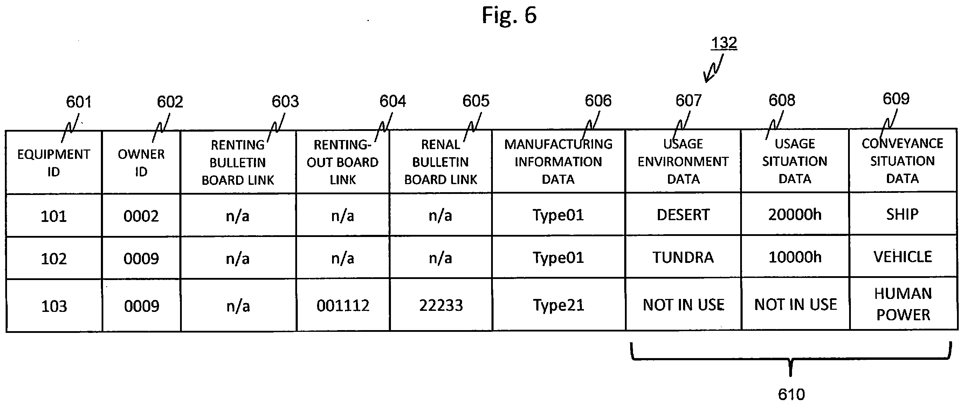

FIG. 6 is an exemplary content in the asset database 132. This example is represented by one table, but it is obvious that the data may be divided into a plurality of tables insofar as data correspondence is kept.

The asset database 132 includes links (information indicative of a data storage location) 603 to 605 to the data of the renting bulletin board 201, the renting-out board 300, and the rental bulletin board 400, in addition to an owner ID 602 corresponding to a facility ID 601.

Manufacturing information data 606 is, for example, a manufacturing date of the facility, and a performance at the point of manufacturing. Since this is universal to be able to be simultaneously stored upon registration of the facility ID.

Usage history information 610 includes facility usage environment data 607, facility usage situation data 608, facility conveyance situation data 609, and the like.

The facility usage environment data 607 is data regarding an environment where the facility is used. For example, environment data that may affect to the reliability, such as a kind of a usage area (for example, the desert and the tundra area) or a country name, and an absolute value such as a temperature and a humidity, a degree of change, dirt, and the like in a usage is included. For example, in the desert, a change in temperature is large in a day, and a risk that the sand or the like gets into the facility is high. The temperature often stationary falls below 0 degrees in the tundra. A high-temperature and humidity environment is assumed in the jungle. Under these environments, it is assumed that a battery life and a failure rate and a level of fatigue of the sensor terminal increase, and respective ways to affect to the failure rate and the level of fatigue will change. It is also possible to perform the specification by the country name or a latitude and a longitude, not the kind as described above. Alternatively, it is also possible to perform the definition by a climatic division such as Koeppen's climatic division. When the usage region can be known, it is easy to establish an environmental model based on a widely known climatic division or the like.

The facility usage situation data 608 is data representing a usage situation of the facility itself. That is, it is data of a state where the facility is used for its main object. For example, in a case of an MEMS sensor, the number of reception, its strength, and the like, or a used time are included. In a case of a battery, a charge and discharge speed is included. In a case of a joint portion such as a connector, the number of removal and the like are included. The facility usage situation data will be referred to as "history information when the facility is used."

The facility conveyance situation data 609 is data such as conveyance means, a distance, a time, and a conveyance environment between usage points and storage points. Facility storage situation data and installation situation data may be included here.

The facility usage history information 610 is one that records a history in accordance with a predetermined unified template at every usage. The record may be manually performed, but may be automatically performed by adding an electronic sensor or tag to the facility. As the electronic sensor or tag, a known one such as an acceleration sensor, a temperature sensor, a humidity sensor, a position sensor by a GPS or the like, and various electronic tags can be used.

Here, the facility conveyance situation data and the storage situation data are referred to as "history information other than when the facility is used." That is, this is the history data in a state where the facility is not used for its main object.

The reliability evaluation server 133 of the asset distribution company 130 calculates the reliability factor that evaluates the reliability of the facility, using the data in the asset database 132. As the data that will be a base for the calculation, the usage history information 610 is especially important. The usage situation data 608 that shows the facility usage situation should be considered. The facility usage environment data 607, for example, usage area information is used to evaluate a damage applied to the facility. For example, it is considered that the use in the desert where a temperature difference is extreme accumulates the damage more than the use in a temperate region.

As a property of the resource exploration facility, the facility is often conveyed over a long distance. Thus, the facility conveyance situation data 609 is also used to evaluate the damage applied to the facility. For example, in an overland conveyance by the track, an impact applied to the facility is large, and it is considered that the damage is more accumulated than a conveyance by the ship or the airplane.

A reflecting process to the reliability evaluation of the usage history includes one based on a common deterioration evaluation approach, for example, performance deterioration data using an actual product, an acceleration test in a laboratory, an evaluation result in simulation, a change with time of the data at a test. A known deterioration model may be used. As the reliability factor that will be an output, various kinds of values related to the reliability can be used. For example, it is also possible to individually set a guarantee period as necessary, to express a degree of deterioration using a probability, to perform presentation based on a probability distribution or the like, and to perform setting based on a deterioration index additionally set.

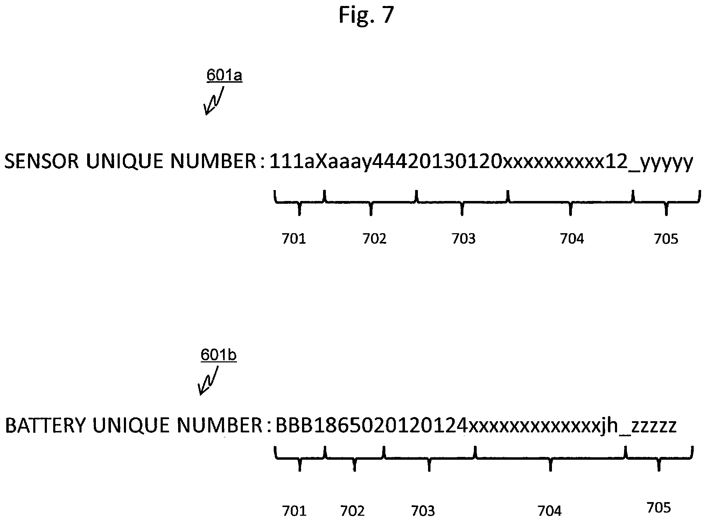

FIG. 7 is a view, exemplifying a sensor and a battery as the facility, illustrating a specific example of a sensor unique number 601a that is a facility ID of the sensor, and a battery unique number 601b that is a facility ID of the battery. The facility ID 601 includes a company code 701, a product model 702, a manufacturing date 703, a manufacturing number 704 provided from a manufacturer, an identifier 705, and the like. Here, it is also possible to facilitate a field operation as the reliability can be determined from the number, by adding degree of reliability information calculated in the reliability evaluation server 133 to the identifier 705. In the example in FIG. 7, the facility ID 601 includes many pieces of information, and individual facility is independently managed. However, collective management may be performed such that the manufacturing date is entered in the unique number, and a system side brings specific kind of products at the predetermined manufacturing date or within a predetermined manufacturing period together as a group.

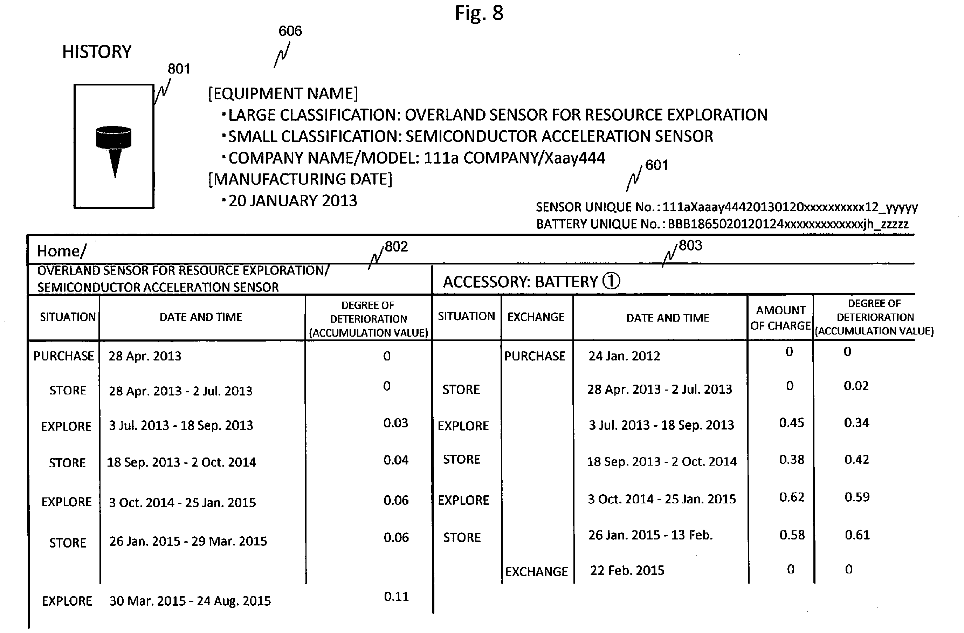

FIG. 8 is a view illustrating a state where, for a facility (sensor) having a certain unique facility ID (sensor unique number) 601, the usage history information 610 is displayed on a monitor. In this example, information of the battery is simultaneously displayed associated with the sensor. The sensor incorporates the battery, and often managed and operated integrally. Thus, for a purpose of a quality management of the facility, it is convenient to manage by associating the facility ID 601 of the sensor with the facility ID 601 of the battery as in the example in FIG. 8. The table may be managed by associating the sensor to the battery separately.

With respect to the sensor, the battery is associated again when being exchanged. The sensor unique number 601a and the battery unique number 601b can be managed by being associated by an identical number in the identifier 705. Alternatively, the system side may perform correspondence management of the unique numbers.

In the display example in FIG. 8, the manufacturing information data 606 such as an equipment name and a manufacturing date is displayed at the upper left. An equipment appearance photograph 801 may be displayed.

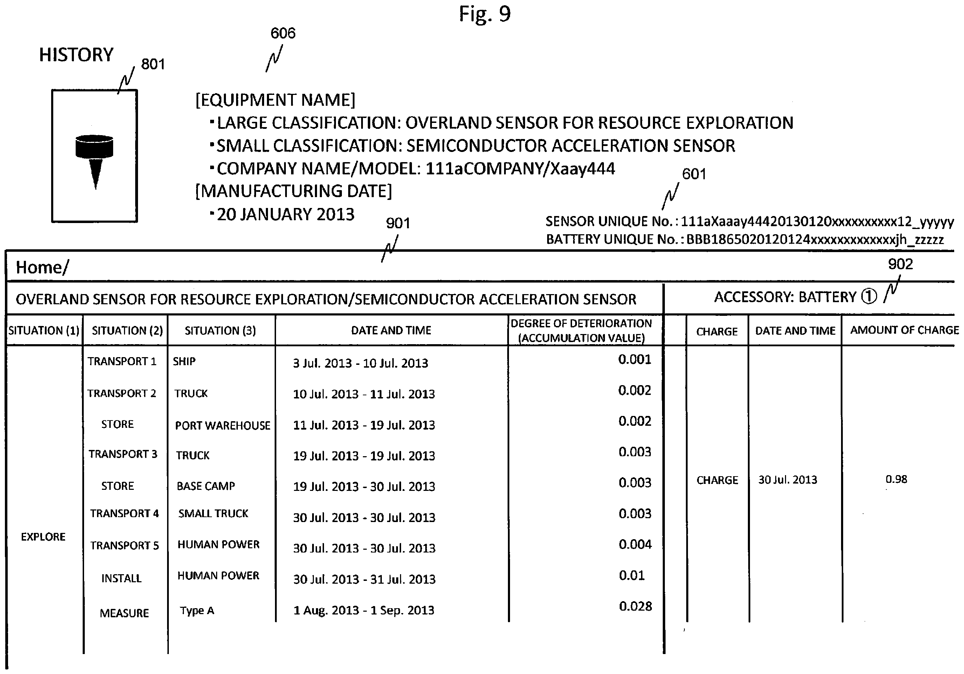

On a main screen, sensor information 802 is displayed at the left, and battery information 803 accompanied by the sensor is displayed at the right side. In the sensor information 802, as an outline of the usage history information 610, situations such as "PURCHASE," "STORE," and "EXPLORE," these dates and times, a degree of deterioration that is an exemplary reliability factor calculated in the reliability evaluation server 133 are displayed. As one example, it may be configured to refer the detail content on another screen, when "EXPLORE" is clicked. This will be described later in FIG. 9.

In the battery information 803, as an outline of the usage history information 610, situations such as "PURCHASE," "STORE," and "EXPLORE," these dates and times, and a degree of deterioration that is the reliability factor calculated in the reliability evaluation server 133 are displayed. For the battery, as one kind of the situation, information of "EXCHANGE" is also added. Information of "AMOUNT OF CHARGE" is also displayed.

The degree of deterioration that is the reliability factor of the battery can be calculated, for example, taking data of a battery life expectancy experimentally obtained and a maximum voltage after charging as a deterioration model, by comparing it with the data of the maximum voltage after charging. Instead of the data of the maximum voltage, data of the number of charging can be used. Alternatively, it also can be set by measuring a State of Charge (SoC) and a Stae of Health (SoH) as necessary, for example, in charging.

In the example in FIG. 8, when the degree of deterioration exceeds a threshold, the exchange is performed. In a case of this example, the threshold is 0.6. When the degree of deterioration exceeds this, the exchange is performed. Alternatively, when it is determined that the degree of deterioration exceeds the threshold at a next exploration, the exchange may be performed.

FIG. 9 is an exemplary screen that displays the content of "EXPLORE" in FIG. 8 in detail. Data in FIG. 9 is also a part of the usage history information 610. In a main screen 901, the detail of the exploration content is displayed as "SITUATION (1)," "SITUATION (2)," "SITUATION (3)," "DATE AND TIME," and "DEGREE OF DETERIORATION (ACCUMULATION VALUE)."

"SITUATION (1)" is information corresponding to "Situation" in FIG. 8, and in this example, is "EXPLORE." "SITUATION (2)" is a detail of the content of "EXPLORE," and processes such as "TRANSPORT," "STORE," "INSTALL," and "MEASURE" are defined. "SITUATION (3)" is a further explanation of "SITUATION (2)," and for example, for "TRANSPORT," types of conveyance means such as "SHIP," "TRACK," "SMALL TRACK," and "HUMAN POWER" are defined. "DATE AND TIME" is a time corresponding to the process of "SITUATION (2)."

In FIG. 8 and FIG. 9, "MEASURE" is the history information when the facility is used. "TRANSPORT," "STORE," "INSTALL," and the like are the history information other than when the facility is used. Thus, in this example, data in the situation where the facility is not used as the facility is also held and used.

"DEGREE OF DETERIORATION (ACCUMULATION VALUE)" is an accumulation value such that the degree of deterioration of the facility by each process is calculated based on the data of "SITUATION (2)," "SITUATION (3)," and "DATE AND TIME." For the calculation of the degree of deterioration, various deterioration models can be used. As a simple example, the degree of deterioration of "TRANSPORT" can be obtained such that a deterioration parameter A is determined for each of "SHIP," "TRACK," "SMALL TRACK," and "HUMAN POWER," and a conveyance period B (hour) calculated from the date and time is integrated to this. For example, when transportation is performed by the ship during B (hour), using a deterioration parameter Aship of the ship preliminarily known and set, the calculation with Aship × B may be simply performed. The deterioration parameter is determined corresponding to the conveyance means. For example, since the track transportation shakes to provide impact, a deterioration parameter Atruck is determined larger than those of the human power and the ship, and the degree of deterioration is made large even at a short-term transportation.

The calculation of the degree of deterioration is not limited to the above-described example. The calculation can be performed using known various deterioration models. Alternatively, it may be take a form that obtains the degree of deterioration such that, through the past data, the experimentation, the simulation, and the like, the degree of deterioration provided to each device is preliminarily modeled, and transportation condition (a parameter that contributes to the deterioration, such as the means, the period, the vibration, and the temperature and humidity) is provided as the input. Here, the following configuration is preferred: the parameter that contributes to the deterioration is known in advance, and a main deterioration factor is collected from the sensor.

The data on the main screen 901 may be recorded including more detailed data such as a temperature, a humidity, a distance, an impact (acceleration), and an air pressure at the time of transportation, in addition to the example in FIG. 9. On the other hand, a data amount can be reduced, and a labor of collecting can be saved such that the calculation has been performed by a simple model based on past detailed data. A part that is not important can be simply estimated such that a common value has been set and input.

On the right side of the main screen, information of the battery mounted on the sensor is displayed. The example in FIG. 9 shows the charge is performed before installation, but due to the deterioration of the battery, the amount of charge is not 1. For example, it is known that the amount of charge possibly falls below an initial value 1 by the use up to the present, and the maximum amount of charge simply deteriorates only by leaving the battery without using after purchase.

The reliability evaluation server 133 calculates the reliability factor of the facility based on the degree of deterioration calculated as described above. The reliability factor can be used as the reliability factors 303, 403, and 406 illustrated in FIG. 2 to FIG. 4.

### <5. Asset Distribution Process>

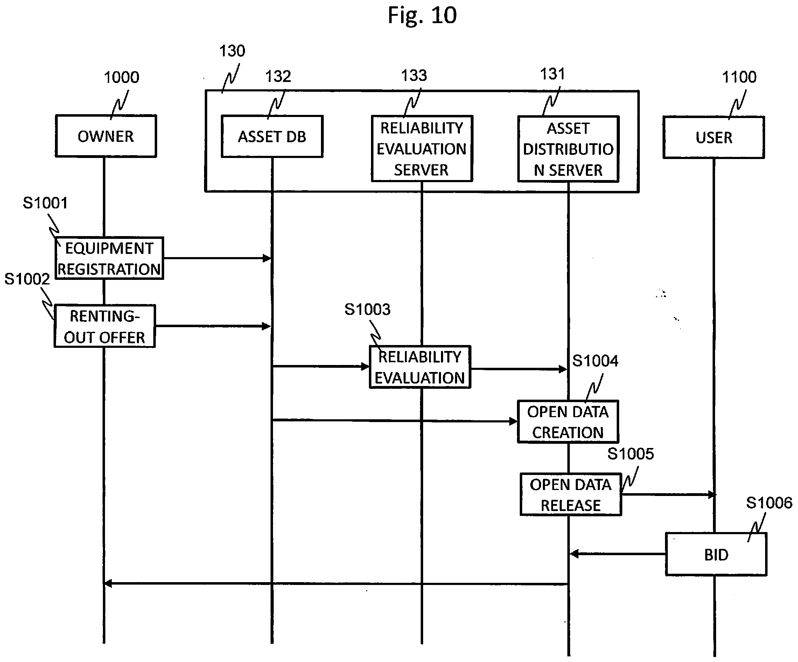

FIG. 10 is a view illustrating an exemplary process flow in the asset distribution system in the example. As described above, any of the resource exploration equipment company 111, the resource exploration service company, and the resource exploration rental company 121 can become an owner 1000 and a user 1100.

The owner 1000 that desires to rent out the holding facility registers the holding facility in the asset database 132 (S1001). At a first phase in the registration, the facility ID 601, the owner ID 602, and the manufacturing information data 606, and the like illustrated in FIG. 6 are registered. In the registration, if the usage history information 610 prior to the time of the registration exits, it is stored. After the registration, the usage history information 610 after the time of the registration is stored in real-time or by batch processing.

At the point of the registration to the asset database 132, the facility is not required to be able to be actually rented out. At the point when the renting-out will be performed after the registration, the owner 1000 registers a renting-out offer in the asset database 132 (S1002). The renting-out offer includes at least information regarding the owner (for example, the owner ID 602), information regarding the facility (for example, the facility ID 601, a facility model, and a quantity), and information of a renting-out-possible period, but may include other information. The data of the renting-out offer is matched with the facility ID 601 by the renting-out board link 604 in the asset database 132. For the facility that is currently used and cannot be rented out, the renting-out board link 604 shows "n/a."

The reliability evaluation server 133, after accepting the renting-out offer from the owner 1000, performs the reliability evaluation to calculate the reliability factor, based on the manufacturing information data 606 and the usage history information 610 of the facility that will be a renting-out object (S1003). In the calculation of the reliability factor, at least from the usage history information 610 illustrated in FIG. 6, one that significantly contributes to the deterioration of the facility is considered. For example, in a case of a semiconductor-type acceleration sensor, at least the impact in the conveyance, the installation, and in the recovery, or the usage period, especially, the usage period in the severe environment are considered to significantly contribute to the deterioration. Thus, such data, the usage environment data 607, the usage situation data 608, and the conveyance situation data 609 in FIG. 6 are considered. In particular, the semiconductor-type acceleration sensor has a configuration that catches a slight elastic wave. However, in the conveyance or when being installed on earth's surface, large impact is assumed compared with its reception level. Thus, it is preferred to consider this when the reliability factor is calculated. Alternatively, the following case is also assumed: it is not necessity to use such information for the calculation of the reliability factor, or it is not necessary to obtain such information itself, by contriving inside and outside the sensor so that such impact is not be applied. In the case of the battery, since the charging and discharge speed and a battery temperature at this time are especially important, the data regarding them is considered. Then, since a storage situation (for example, the temperature and the humidity) where the charge and discharge is not performed also has an influence, they are also considered as necessary.

Insofar as the facility is in a "STORE" situation at the point of the renting-out offer from the owner 1000, the reliability evaluation server 133 can immediately evaluate the reliability. On the other hand, although the facility is during the use, the owner possibly performs the renting-out offer in expectation of a future idling. In this case, the reliability evaluation is suspended until when the facility becomes in the "STORE" state.

After the calculation of the reliability factor, the asset distribution server 131 creates open data that can be released to the user 1100, from the calculated reliability factor, the data of the renting-out offer from the owner 1000, and the data in the asset database 132 (S1004). To a format of the open data, for example, as shown on the renting-out board 300 (FIG. 3), in addition to the information of the renting-out offer from the owner 1000, the calculated reliability factor 303 is added. The reliability factor 303 can cause the user 1100 to determine the quality and the reliability of the facility on a unified criteria.

Since the information regarding the owner 1000 is removed from the open data created differently from the data in the asset database 132, anonymity of the facility owner is secured.

The created open data is released to each user through the network 140 to ensure browsing of it (S1005). The user 1100 that desires the use of it can bid for this (S1006). A bidding result is transmitted to the owner 1000 via the asset distribution server 131, and when the condition matches, the facility is rented out.

In the above-described example, for the entire control of the asset database 132, the reliability evaluation server 133, and the asset distribution server 131, in this example, the asset distribution server 131 controls the entire.

### Example 2

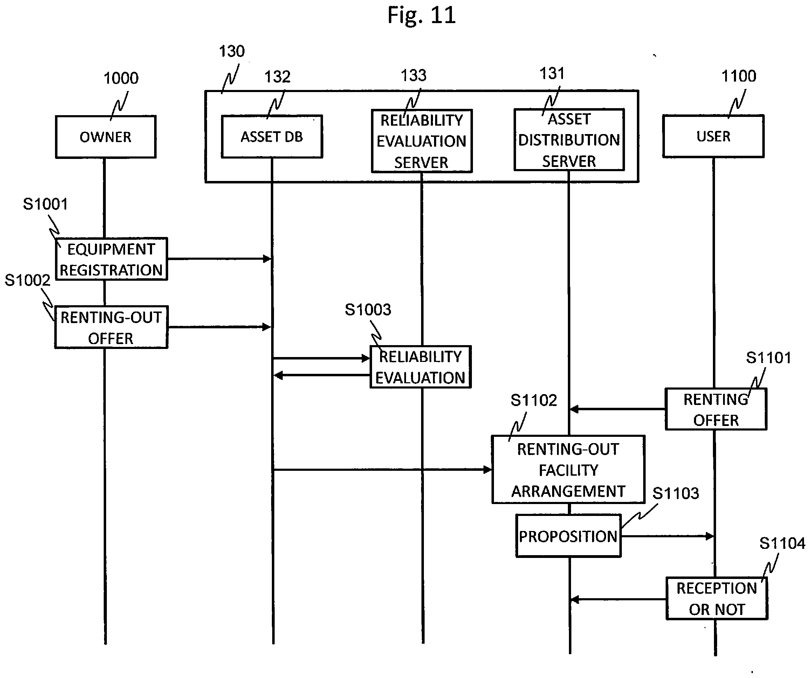

FIG. 11 is a view illustrating another example of the process flow in the asset distribution system in the example. Like reference numerals designate corresponding or identical elements described in the example in FIG. 10, and therefore such elements will not be further elaborated or simplified here.

In the example in FIG. 11, after the calculation of the reliability factor (S1003), the reliability factor is once stored as one item in the asset database 132.

Then, the asset distribution server 131 accepts a renting offer desired from a side of the user 1100 (S1101). A content in the renting offer is, for example, information as shown on the renting bulletin board 201 in FIG. 2: the renting period, the equipment model, the desired price, the reliability factor, the estimated use area, and the like. For the equipment model, in FIG. 2, the user can put a plurality of checks in models having a compatibility that can be used at the same time. Alternatively, a side of the asset distribution server 131 may automatically extract a model having the compatibility, based on a designation of a single model from the user.

The asset distribution server 131 that has accepted the renting offer arranges a renting-out facility that has matched the desire of the user, based on the content in the asset database 132 (S1102).

The arranged content is proposed to the user 1100 (S1103). The user answers reception or not to the proposition (S1104).

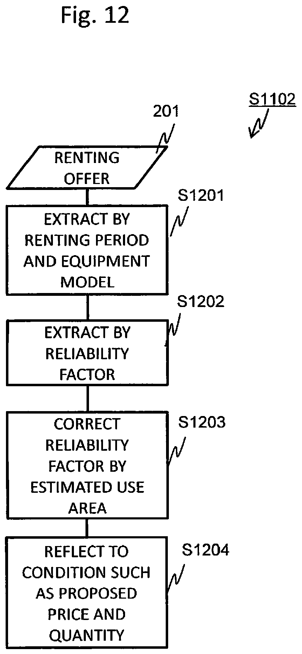

FIG. 12 illustrates a detail process of a renting-out facility arrangement by the asset distribution server 131 (S1102). Here, the renting offer from the user 1100 includes information of a renting period, an equipment model, a renting quantity, a reliability factor, and an estimated use area.

The asset distribution server 131 first searches the asset database 132, to extract the facility that fulfills the renting period and the equipment model in the renting offer among the facilities having the renting-out offer from the owner 1000. For the equipment model, the equipment that fulfills the compatibility is also simultaneously extracted (S1201). In the extraction, the owner 1000 may extract different ones together. When the facilities held by a plurality of owners are arranged together, it is only necessary to divide the rental rate corresponding to the rate of the folding facilities.

Next, the asset distribution server 131 extracts the facility that fulfills the reliability factor among the facilities extracted at the process S1201, based on the reliability factor in the renting offer (S1202). For the reliability factor of the facility, since it is stored in the asset database 132 after the process S1003, it is only necessary to compare this with the data in the renting offer.

Next, the asset distribution server 131 corrects the reliability factor of the facility by the estimated use area in the renting offer (S1203). That is, the reliability factor in the asset distribution server 131 is an index that evaluates the reliability based on the past history, and indicates, for example, the operation rate (or the failure rate) under a constant environment (for example, a room temperature and a stationary environment). However, since the resource exploration facility targeted in this example is possibly used under the severe environment such as the desert and the tundra area, it is difficult to assure the reliability under the condition of the use only by the reliability evaluation based on the past data. In particular, when the MEMS sensor and the battery are used in the severe environment, there is a possibility that they concurrently become unusable due to the burden received in the past.

For example, when the estimated use area is the severe environment such as the desert and the tundra area, the correction is performed by inputting the reliability factor in a predetermined set model based on an assumed usage environment and an assumed use condition. For example, the correction is performed, for example, by decreasing a value stored in the asset database 132 to 98% only in this case. As a result of this correction, when there is a facility that does not satisfy the reliability factor in the renting offer, a process such that this facility is removed from the renting-out object, and a unit price is increased by its proportion is performed. Then, the facility that fulfills the corrected reliability factor is ensured in the renting quantity for the renting offer.

Alternatively, since the usage quantity is an order with million pieces, its quality assurance is probabilistic. Thus, on the premise of the failure during the use period, the renting-out is performed by increasing the quantity. In this case, although it is not necessary to change the reliability factor, since the renting-out quantity increases, the sum of the renting-out price increases. The user arranges the sensors in a density that preliminarily assumes the failure, to allow the resource exploration with a desired accuracy.

For example, now, it is assumed that the reliability factor in the renting offer is 90, and the renting quantity in the renting offer is 100 pieces. When the estimated use area is a normal area, not the severe environment, since the reliability factor is not corrected, the products having the reliability factor with 90 are extracted. When this quantity is 1000 pieces, 100 pieces are selected to be rented out among them.

On the other hand, when the estimated use area is the severe environment, for example, the reliability factor is corrected to 95. Accordingly, the products having the reliability factor with 95 are extracted. When this quantity is 500 pieces, 100 pieces are selected to be rented out among them. In this case, since a parameter of the products that can be rented out reduces, it is preferable to increase the unit price. As a method to set a price, it is considered to determine the unit price corresponding to the reliability factor. Alternatively, it is considered to determine the unit price corresponding to the parameter of the product that can be rented out. For example, when the parameter of the product that can be rented out has halved, the unit price is doubled. The arrangement is performed in the above-described method, to present the unit price to the user.

When the estimated use area is the severe environment, for example, without changing the reliability factor to keep the reliability factor with 90, 1000 pieces of products are extracted. Although the desired renting quantity of the user is 100 pieces, assuming increase in the failure rate in the severe environment, the arrangement is performed in addition the spare quantity. For example, the presentation is performed to the user as a set of 120 pieces by adding 20 pieces.

As described above, in the example 2, the arrangement of the renting-out facility considering the estimated use area is ensured with respect to the desired condition from the user. Thus, the user can examine by receiving this proposition.

The configuration of above-described each server may be constituted of a single computer, or may be constituted of another computer where given parts of an input device, an output device, a processing device, and a storage device are coupled via the network.

In this example, functions equal to the functions configured of the software can be achieved by hardware such as Field Programmable Gate Array (FPGA) and Application Specific Integrated Circuit (ASIC). Such a configuration is also included in the range of the present invention.

The present invention is not limited to the above-described embodiment. Various modifications are included in the present invention. For example, it is possible to replace a part of the configuration in a certain example to the configuration in another example. It is also possible to add the configuration of another example to the configuration of a certain example. It is also possible to perform addition, removal, and replacement of the configuration in another example on a part of the configuration in each example.

### Industrial Applicability

It can be used for the assets rental service system.

### Reference Signs List

- 101:: resource exploration service company,
- 102:: usage facility data,
- 111:: resource exploration equipment company,
- 112:: supply facility data,
- 121:: resource exploration rental company,
- 122:: facility data.

## Claims

1. An asset rental service system that ensures rental of a facility for resource exploration, the asset rental service system comprising:
an asset database that associates and stores a model, a renting-out period, history information when the facility is used, and history information other than when the facility is used, of the facility that an owner desires to rent out, with the owner;
a reliability evaluation server that calculates a reliability factor related to a reliability of the facility, based on the history information when the facility is used and the history information other than when the facility is used; and
an asset distribution server that accepts a request from a user that desires to rent the facility.

2. The asset rental service system according to claim 1, wherein
the history information other than when the facility is used includes at least any of conveyance history information and storage history information.

3. The asset rental service system according to claim 2, wherein
the conveyance history information includes at least one type of conveyances by a ship, a vehicle, and a human power.

4. The asset rental service system according to claim 1, wherein
in the history information when the facility is used and the history information other than when the facility is used, a management is performed based on an identifier of the facility, and an identifier of a sensor element or a battery corresponding to the facility.

5. The asset rental service system according to claim 1, wherein
the asset rental service system collects past usage area information of the facility and sets the reliability factor based on the past usage area information.

6. The asset rental service system according to claim 5, wherein
the usage area information includes at least one type of a desert, a tundra area, a jungle (high-temperature and humid region), and an urban area, a climatic division, a country name, a latitude and a longitude, or a combination of them.

7. The asset rental service system according to claim 5, wherein
the asset rental service system determines a facility to be used, using estimated use area information of a facility included in the request from the user.

8. The asset rental service system according to claim 5, wherein
the asset rental service system determines a quantity of a spare facility, using estimated use area information of a facility included in a bidding result of the user.

9. An asset rental service system comprising:
a secure asset database that stores an identifier, a model, a renting-out period, usage environment data, usage situation data, and conveyance situation data, of a facility that an owner desires to rent out;
a reliability evaluation server that calculates a reliability factor of the facility, based on the usage environment data, the usage situation data, and the conveyance situation data; and
an asset distribution server that accepts a request from a user that desires to rent the facility.

10. The asset rental service system according to claim 9, wherein:
the request includes a model, a renting-out period, a quantity, and usage environment data, of a facility that a user desires to rent, and
the assets distribution server corrects the reliability factor based on the usage environment data.

11. The asset rental service system according to claim 9, wherein:
the request includes a model, a renting-out period, a quantity, and usage environment data, of a facility that a user desires to rent, and
the assets distribution server corrects the quantity based on the usage environment data.
